Europäisches Patentamt

European Patent Office

Office européen des brevets

(19)

(11) Veröffentlichungsnummer : **0 406 164 B1**

# (12) EUROPÄISCHE PATENTSCHRIFT

(45) Veröffentlichungstag der Patentschrift :
**07.10.92 Patentblatt 92/41**

(51) Int. Cl.$^5$ : **G01G 13/02**, G01G 19/38,
B65G 65/48, F16K 29/00

(21) Anmeldenummer : **90810446.6**

(22) Anmeldetag : **19.06.90**

(54) **Vorrichtung zum Dosieren von trockenem und/oder pulverförmigem Schüttgut, insbesondere von Farbstoffpulver.**

(30) Priorität : **27.06.89 CH 2381/89**

(43) Veröffentlichungstag der Anmeldung :
**02.01.91 Patentblatt 91/01**

(45) Bekanntmachung des Hinweises auf die
Patenterteilung :
**07.10.92 Patentblatt 92/41**

(84) Benannte Vertragsstaaten :
**AT BE CH DE DK ES FR GB GR IT LI LU NL SE**

(56) Entgegenhaltungen :
**EP-A- 0 016 904**
**EP-A- 0 074 283**
**EP-A- 0 226 157**

(56) Entgegenhaltungen :
**EP-A- 0 251 754**
**EP-A- 0 287 708**
**EP-A- 0 295 035**
**PATENT ABSTRACTS OF JAPAN vol. 8, no.**
**164 (M-313)(1601) 28 Juli 1984, & JP-A-59 57834**
**(KUBOTA TEKKO K.K.) 03 April 1984,**

(73) Patentinhaber : **CIBA-GEIGY AG**
**Klybeckstrasse 141**
**CH-4002 Basel (CH)**

(72) Erfinder : **Mheidle, Mickael**
**Rue Alphonse Daubet 6**
**F-68390 Sausheim (FR)**
Erfinder : **Bauhofer, Roland, Dr.**
**Ob den Reben 13**
**CH-4461 Böckten (CH)**

## Beschreibung

Die Erfindung betrifft eine Vorrichtung zum Dosieren von trockenem und/oder pulverförmigem Schüttgut, insbesondere von Farbstoffpulver z.B. in einer Labor-Färbestraße für Textilien, mit einem Ausgabebehälter, der in seinem unteren Bereich einen verschließbaren Auslaß hat, und mit einer von dem Auslaß des Behälters her mit einem vorzugsweise rotierenden Fördermittel beschickbaren Waage für die jeweils zu dosierende Menge.

Eine derartige Vorrichtung ist aus der EP-A-0 287 708 bekannt. Der untere Bereich des Ausgabe-Behälters dieser vorbekannten Vorrichtung ist von einer Förderschnecke durchsetzt, die den pulverförmigen Farbstoff aus dem Behälter durch eine seitliche Öffnung hinausbefördern kann. Er rieselt von dort in die unterhalb der Ausgabeöffnung angeordnete Waage, die den weiteren Ausgabeprozeß nach Erreichen eines eingestellten Gewichtes dadurch unterbrechen kann, daß eine Verschlußscheibe vor die Ausgabeöffnungen gezogen und der Antriebsmotor für die Förderschnecke stillgesetzt wird.

Abgesehen davon, daß die Förderschnecke im unteren Bereich des Ausgabebehälters immer nur von oben nachfallendes Gut erfassen kann, während seitlich und unterhalb von ihr befindliches Gut liegenbleibt und altern kann, arbeitet diese Vorrichtung mit einer gewissen Trägheit, weil von dem von der Waage ausgehenden Signal bis zum Stillsetzen des Antriebsmotors für die Förderschnecke und insbesondere zum Zurückziehen des Verschlusses in Schliessstellung soviel Zeit vergeht, dass noch nicht genau kalkulierbare Ueberschüsse an Farbstoffpulver ausgegeben werden können.

Aehnliche Vorrichtungen mit seitlichem Austrag sind beispielsweise auch aus der EP-A-295,035 bekannt. Bei diesen Vorrichtungen wird das Pulver durch Vibrieren des Vorratsbehälters, durch einfaches Neigen des Behälters oder mit Hilfe von Förderschnecken oder Paddelrührern auf eine Wägeeinrichtung gefördert. Vibrieren und Neigen des Behälters erlaubt keine hohe Genauigkeit in der Dosierung. Für die Förderschnecken oder Paddelrührer ergeben sich Dozierprobleme durch Nachlaufen der Fördereinrichtungen.

Aus der EP-A-16,904 und dem Patent Abstracts of Japan, vol. 8, No. 164 (M 313) [1601], 28th July 1984; und JP-A-59 57 834 sind bunkerartige Behälter mit einer Oeffnung im Bodenbereich bekannt. Im Oeffnungsbereich ist ein rotierbarer Drehkegel angeordnet, der den Austrag durch den ständig offenen Ringspalt erleichtern soll. Derartige Bunker werden beispielsweise als Vorlagebehälter für nachgeschaltete Dosiereinrichtungen verwendet, für eine direkte Dosierung sind sie nicht ausgebildet.

In der EP-A-251,754 (US-A-4,844,297) ist ein Dosierer für Flüssigkeiten beschrieben. Die Dosierung der Flüssigkeit erfolgt in zwei Stufen. Zunächst erfolgt eine Grobdosierung durch Zwangsförderung der Flüssigkeit unter Druck durch eine erste Auslassöffnung. Die genaue Einstellung der gewünschten Menge erfolgt durch weitere Zugabe von Flüssigkeit durch eine zweite Nebenöffnung. Diese Form der zweistufigen Dosierung ist sehr aufwendig und überdies kaum auf Pulver übertragbar.

Im Zusammenhang mit dem Transport von mit Partikeln versetzten Flüssigkeiten ist in der EP-A-226,157 beschrieben, dass es von Vorteil ist, bei einem Ventil den Ventilkörper relativ zum Ventilsitz rotierbar auszubilden. Auf diese Weise kann durch Rotation des Ventilkörpers beim Schliessvorgang der Ventilsitz von anhaftenden Partikeln befreit werden.

In der EP-A-74,283 (US-A-4,478,300) ist im Zusammenhang mit Wägevorrichtungen für Granulate und ähnliches vorgeschlagen, glatte Oberflächen mit Noppen, Riffelungen, Rillen und ähnlichem zu versehen, um ein Anhaften des Wägegutes zu verhindern.

Die bislang bekannten Dosiervorrichtungen für Pulver weisen das Problem auf, dass aufgrund ihrer Auslegung keine ausreichend genaue Dosierung möglich ist.

Gerade in Labor-Färbestraßen, in denen Färbeversuche mit Textilien gemacht werden sollen, kommt es jedoch auf eine ganz erhebliche Präzision beim Dosieren des Farbstoff-Pulvers an.

Es besteht deshalb die Aufgabe, eine Vorrichtung der eingangs genannten Art zu schaffen, mit welcher einerseits die Genauigkeit der Dosierung verbessert und andererseits die Arbeitsgeschwindigkeit erhöht werden kann. Darüber hinaus sollen Verunreinigungen des Arbeitsplatzes mit Farbstoff-Pulver weitgehend vermieden werden.

Die Lösung dieser Aufgabe besteht darin, daß der Auslaß an der Unterseite des Behälters angeordnet ist und als Verschluß einen sich nach oben verjüngenden, vertikal nach unten verstellbaren Ventilkörper aufweist, daß der Ventilkörper drehantreibbar ist und zumindest während seiner Offenstellung rotiert und Mittel zum Fördern des Gutes in Richtung zu der Auslaßöffnung und/oder gegen Verklumpen des Gutes trägt.

Durch die Anordnung des Auslasses an der Unterseite des Behälters ist sichergestellt, daß nicht Teile des Behälterinhaltes ungefördert liegenbleiben und im Laufe der Zeit z.B. Farbänderungen erfahren. Darüber hinaus kann dadurch die Schwerkraft zum Austragen des zu dosierenden Pulvers ausgenutzt werden.

Besonders zweckmäßig und vorteilhaft ist es jedoch, daß der Verschluß für die Ausgabe- oder Auslaßöffnung gleichzeitig Fördermittel aufweist, so daß vor allem das Ende des Ausgabeprozesses sehr präzise bestimmt werden kann und nicht zwei unabhängig voneinander durchzuführende Vorgänge, nämlich das Stillsetzen eines Fördermittels und das Verstellen eines Verschlusses erforderlich sind. Somit kann mit der erfindungsgemäßen Vorrichtung gegen Ende des Dosiervorganges bereits mit dem Verschließen der Ausgabeöffnung und eventuell auch einer Verminderung der Fördergeschwindigkeit begonnen werden, so daß nach Erreichen des vorgewählten Gewichtes auf der Dosierwaage mit hoher Genauigkeit das Ausgeben des Farbstoffpulvers beendet werden kann. Die Doppelfunktion des Ventilkörpers als Verschluß und Fördermittel erlaubt außerdem eine hohe Arbeitsgeschwindigkeit zu Beginn und während des ersten größeren Teiles des Dosiervorganges, wenn nämlich mit relativ hoher Drehzahl und großem Öffnungsspalt an der Auslaßöffnung gearbeitet werden kann, wobei diese beiden Funktionen und ihre Steuerung gut miteinander verknüpft sein können. Eine Klumpenbildung, wie sie im Bereich von Förderschnecken seitlich des Bereiches der Fördergänge solcher Schnecken auftreten kann, wird vermieden.

Besonders zweckmäßig ist es, wenn im Bodenbereich des Behälters oberhalb der von dem Ventilkörper verschlossenen Auslaßöffnung ein Trichter vorgesehen ist. Um so sicherer und besser wird das Gut dem Ventilkörper und damit auch dem Fördermittel zugeführt, um von diesem erfaßt und ausgetragen werden zu können.

Die Auslaßöffnung kann sich von der engsten Stelle des Trichters zu der Unterseite des Behälters und dem Ventilsitz - vorzugsweise konisch - erweitern. Dies ist problemlos dadurch möglich, daß sich der Ventilkörper von dem Ventilsitz nach oben verjüngt, und hat den Vorteil, daß zwischen Ventilkörper und Auslaßöffnung kein Materialstau und keine Verklumpung auftreten kann.

Der größte Querschnitt der sich erweiternden Auslaßöffnung kann dem größten Querschnitt des Ventilkörpers entsprechen und der Ventilkörper kann in Schließstellung vorzugsweise mit seiner unteren Stirnfläche bündig mit der Unterseite des Behälters sein. Dadurch befidet sich der Ventilkörper und vor allem sein wichtiger Dichtungsbereich ebenso wie der entsprechende Gegendichtungsbereich der Auslaßöffnung geschützt innerhalb des Bodens des Behälters.

Als Fördermittel können an dem rotierenden Ventilkörper wenigstens ein Flügel, vorzugsweise mehrere am Umfang gleichmäßig verteilte Flügel vorgesehen sein. Der/die als Fördermittel dienenden Flügel ist/sind dabei zweckmäßigerweise an dem Ventilkörper in dessen bezüglich des Durchmessers vermindertem Bereich angeordnet und von oben nach unten schaufelförmig in dem Sinne gekrümmt, in welchem beim Rotieren des Ventilkörpers ein Vorschub des Gutes nach unten bewirkt wird. Solche Flügel haben dabei den Vorteil, daß sie nicht nur eine gute Förderwirkung haben, sondern eventuelle Verklumpungen des zu dosierenden Gutes jeweils wieder zerstören können, ohne sich jedoch innerhalb des Zuführtrichters zu der sich erweiternden Ausgabeöffnung und eventuell auch innerhalb der Ausgabeöffnung einen Kanal in das pulverförmige Gut zu graben, in den von der Seite her kein weiterer Werkstoff nachfällt. Eine solche bei Förderschnecken auftretende unangenehme Erscheinung wird dabei auch durch die mit dem Dosieren einhergehende vertikale Verstellbewegung der Fördermittel beim Öffnen und Schließen des Ventilkörpers und durch die konische Form des Ventilkörpers verhindert.

Die Mittel zum Fördern und/oder gegen Verklumpen des Gutes können an dem Bereich des Ventilkörpers angeordnet sein, der zumindest in Schließstellung in dem Trichter am Boden des Behälters angeordnet ist. Damit wird gerade im Bereich des Trichters, wo sich das nachströmende pulverförmige Gut unter Umständen verdichten könnte, dem Verklumpen entgegengewirkt und für ein zügiges Weiterfördern nach unten aus dem Trichter heraus gesorgt.

Der oder die Flügel können etwa vom oberen Ende des Ventilkörpers ausgehen und wenigstens über ein Drittel, gegebenenfalls etwa die Hälfte des Ventilkörpers nach unten verlaufen. Dadurch erhält das zu dosierende Gut schon einen guten Vortrieb und kann vor allem die Engstelle zwischen Trichter und Anfang der Ausgabeöffnung gut überwinden, in welchem Bereich sich die Flügel nach der vertikalen Verstellung des Ventilkörpers in Offenstellung aufgrund der erwähnten Maßverhältnisse befinden. In Schließstellung kann nämlich der schlanke Bereich des Ventilkörpers mit den Förderflügeln weitgehend innerhalb des Trichters angeordnet sein und bis nahezu dessen oberem Rand reichen. Wird nun der Ventilkörper nach unten verstellt, geschieht dies auch mit den Fördermitteln, die auf diese Weise in den Bereich der erwähnten Engstelle gelangen können.

Eine zusätzliche oder abgewandelte Ausgestaltung der Erfindung kann darin bestehen, daß der untere Bereich des Ventilkörpers - also der im Durchmesser größere Bereich - Mittel zum Fördern und/oder gegen Verklumpen in Form von gebogenen Rillen oder dergleichen aufweist, deren Biegung und Krümmung vorzugsweise etwa schraubenlinienförmig im Sinne einer Förderschnecke mit beim Rotieren des Ventilkörpers abwärts gerichteter Förderrichtung ausgebildet ist und die auf der Oberfläche des Ventilkörpers angeordnet sind. Mit Hilfe solcher etwa schraubenlinienförmiger, gleichzeitig aber aufgrund der konischen Erweiterung des Ventilkörpers auch spiralförmiger Rillen kann ein guter Fördereffekt auf das auch schon durch die Schwerkraft nach unten tendierende zu dosierende Gut ausgeübt werden und einer Verklumpung innerhalb der Ausgabeöffnung entgegengewirkt werden. Besonders günstig ist es dabei, wenn im unteren Bereich solche Förderrillen und im oberen Bereich insbesondere gekrümmte Förderflügel oder -schaufeln an dem Ventilkörper angeordnet sind.

Um eventuelle Klumpen des zu dosierenden Pulvers mit grösserer Sicherheit zu zerstören, kann es zweckmäßig sein, wenn die Wandungen des Trichters und/oder der sich erweiternden Auslaßöffnung vorzugsweise abwärts gerichtete Rillen, Nuten oder dergleichen aufweisen.

Vor allem bei Kombination der vorbeschriebenen Merkmale und Maßnahmen ergibt sich ein Ausgabebehälter, dessen Verschluß in Offenstellung als zusätzliche Funktionen für ein gutes Nachfördern des Gutes sorgt, welches in vorteilhafter Weise dabei auch der Schwerkraft unterworfen ist. Somit läßt sich vor allem gegen Ende des Dosiervorganges durch einen rechtzeitigen Beginn der Schließbewegung und eine eventuell damit einhergehende Verlangsamung der Rotationsgeschwindigkeit des Ventilkörpers der Dosiervorgang sehr präzise beenden. Zuvor kann jedoch eine relativ schnelle Öffnungsbewegung durchgeführt und durch die Wahl der Drehzahl auch das Nachfördern des Gutes beschleunigt werden, so daß insgesamt dennoch eine schnelle Arbeitsweise möglich ist. Gleichzeitig ist die Vorrichtung konstruktiv einfach, weil sie das Fördermittel und den Verschluß in einem einzigen Teil vereinigt.

Weitere zweckmäßige und vorteilhafte Ausgestaltungen der Vorrichtung sind Gegenstand der Ansprüche 11 und folgende.

Die Ansprüche 11 bis 13 enthalten dabei zweckmäßige Ausgestaltungen über die Lagerung der den Ventilkörper tragenden Welle im Zusammenwirken mit einem Deckel des Behälters, der gemäß Anspruch 12 eine Lagerung dieser Welle enthalten und mit der Welle zusammen bis zu einem Anschlag abwärts verstellbar ist. Anspruch 13 gibt zweckmäßige Mittel für die Verstellung des Deckels an, wodurch gleichzeitig dann auch die Verstellung des Ventilkörpers in Offenstellung bewirkt wird.

Die Anordnung der Mittel zum Niederdrücken des Behälterdekkels und die Möglichkeit von deren Zustellung zu dem Deckel, von dem sie andererseits für ein Nachfüllen des Behälters auch entfernbar sein müssen, sind Gegenstand der Ansprüche 14 und 15, die dabei die zusätzliche Anordnung auch des Antriebsmotors für den drehantreibbaren Ventilkörper angeben.

Konstruktive Ausgestaltungen des relativ zu dem Behälter vertikal verstellbaren Deckels sind Gegenstand der Ansrüche 16 und 17.

Möglichkeiten zur gegenseitigen Steuerung der beim Dosieren zusammenwirkenden Teile einschließlich auch der Zufuhr von Auffangbechern, die die jeweils dosierte Farbmenge auf der Waage aufnehmen können, sind Gegenstand der sich anschliessenden Ansprüche.

Insgesamt ergibt sich eine Vorrichtung, die schnell und präzise arbeiten kann und dennoch in ihrem gesamten maschinellen Aufwand vermindert ist, wobei in vorteilhafter Weise beim Ausgeben der zu dosierenden Menge die Schwerkraft ausgenutzt und ein das Ausgeben des Farbstoffes oder dergleichen Pulver unterstützendes Fördermittel mit dem Verschluß der Ausgabe-öffnung kombiniert ist. Bei Zwischenschaltung eines Computers oder Rechners zur Koordination der Steuerung der einzelnen Elemente ist auch eine gute Einpassung in den Ablauf einer Labor-färbestraße möglich.

Nachstehend ist ein Ausführungsbeispiel der Erfindung mit den wesentlichen Einzelteilen anhand der Zeichnung noch näher beschrieben. Es zeigt in zum Teil schematisierter Darstellung:

Fig. 1 eine Ansicht einer erfindungsgemäßen Vorrichtung zum Dosieren von pulverförmigem Schüttgut mit einem Ausgabebehälter für das Gut, einer darunter angeordneten Waage, einem Magazin für das Gut auf der Waage aufnehmende Becher mit einer Einrichtung zum Vereinzeln dieser Becher und Zuführen zu der Waage sowie der Andeutung eines zum Steuern der Vorrichtung und zum Koordinieren der einzelnen Funktionen dienenden Computers,

Fig. 2 in vergrößertem Maßstab einen vertikalen Schnitt durch den Ausgabebehälter, wobei die Auslaßöffnung verschlossen ist,

Fig. 3 einen Querschnitt durch den Deckel des Behälters und die darin enthaltene Lagerung für die zum Verstellen und Drehen eines Ventilkörpers dienende Welle,

Fig. 4 eine der Fig.2 entsprechende Darstellung des Behälters, wobei der Deckel und die Wellenlagerung sowie der Ventilkörper in Offenstellung vertikal nach unten verstellt sind,

Fig. 5 das Bodenstück des Behälters mit der von dem Ventilkörper verschließbaren Auslaßöffnung und einem zu dieser Auslaßöffnung führenden Trichter,

Fig. 6 einen Querschnitt des Bodenstückes gemäß der Linie VI-VI in Fig.5,

Fig. 7 einen Vertikalschnitt durch den Ventilkörper ohne die ihn tragende Welle,

Fig. 8 eine Draufsicht des Ventilkörpers gemäß Fig.7 mit vier in seinem oberen schmaleren Bereich angeordneten Förderflügeln und in seinem unteren breiteren Bereich angeordneten, gekrümmten Förderrillen sowie

Fig. 9 in schematisierter Darstellung eine Labor-Färbestraße für Textilien, innerhalb welcher die Dosiervorrichtung gemäß Fig. 1 vorgesehen sein kann.

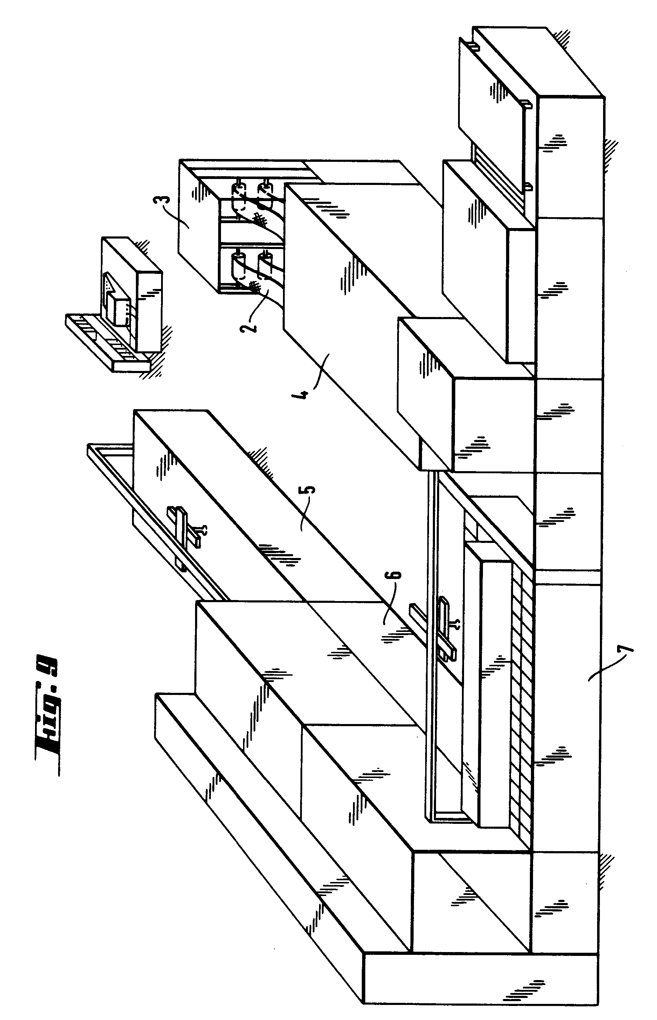

Eine im ganzen mit 1 bezeichnete Vorrichtung dient zum Dosieren von trockenem und pulverförmigem Schüttgut, z.B. von Farbstoffpulver in einer Labor-Färbestraße für Textilien, wie sie in Fig.9 schematisiert dargestellt ist.

Dabei können die zu behandelnden Textilien 2 aus einem Ständer 3 von Rollen abgezogen und in einer anschließenden Arbeitsstation 4 für das Färben vorbereitet werden.

Parallel dazu ist ein Vorratsbehälter 5 für das Farbstoffpulver vorgesehen, welches in der Arbeitsstation 6 mit der Vorrichtung 1 dosiert und dann in Lösung gegeben werden kann. In dem eigentlichen Färbebad 7 kann nun das jeweilige textile Stück 2 mit einem präzise dosierten und gemischten Farbstoff gefärbt werden.

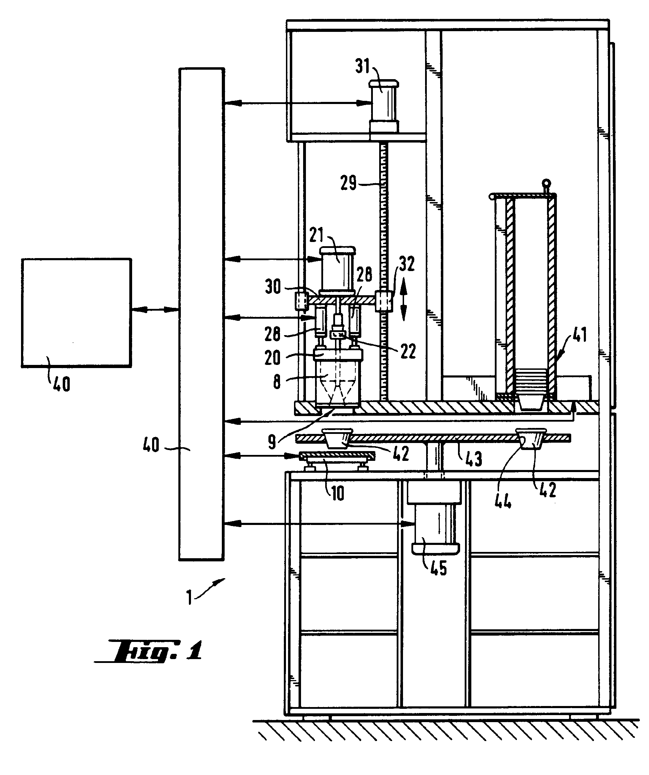

Damit die Lösung in dem Färbebad 7 wirklich die richtige Farbstoffmenge enthält, ist eine genaue und präzise Dosierung mit Hilfe der Vorrichtung 1 erforderlich, die dazu gemäß Fig.1 einen Ausgabe-Behälter 8 für das zu dosierende Schüttgut aufweist, der in seinem unteren Bereich einen noch näher zu beschreibenden verschließbaren Auslaß 9 hat. Ferner ist in diesem Zusammenhang wichtig, daß zu der Vorrichtung 1 eine Waage 10 gehört, die von dem Auslaß 9 her mit der jeweils zu dosierenden Schüttgutmenge mit Hilfe eines rotierenden Fördermittels 11 von dem Auslaß 9 her beschickt werden kann.

Ist die zutreffende gewünschte Pulvermenge in noch zu beschreibender Weise auf die Waage 10 befördert, wird der Auslaß 9 verschlossen.

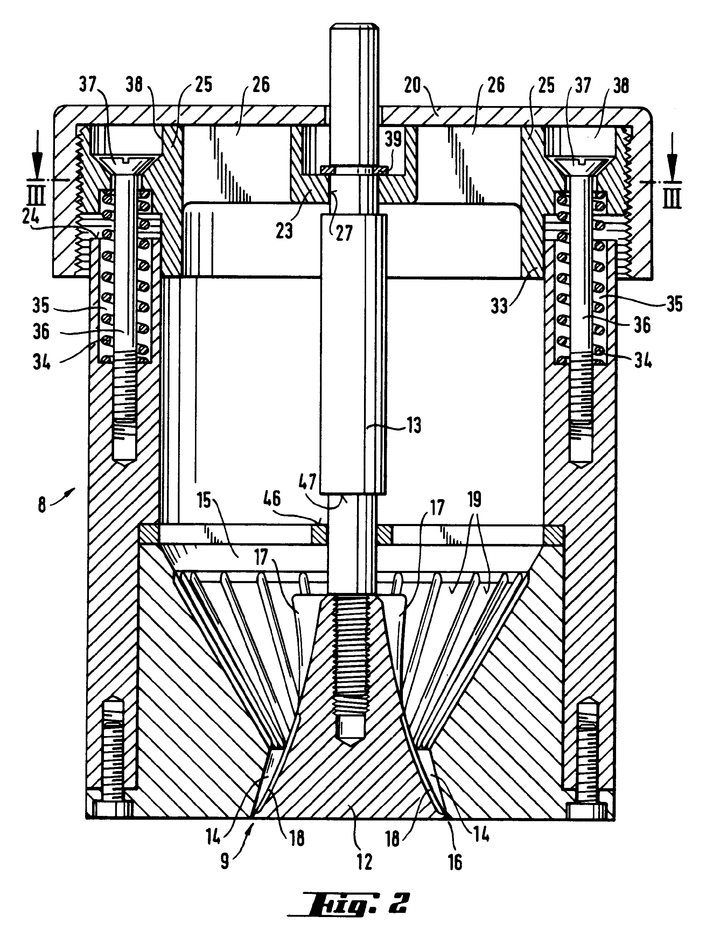

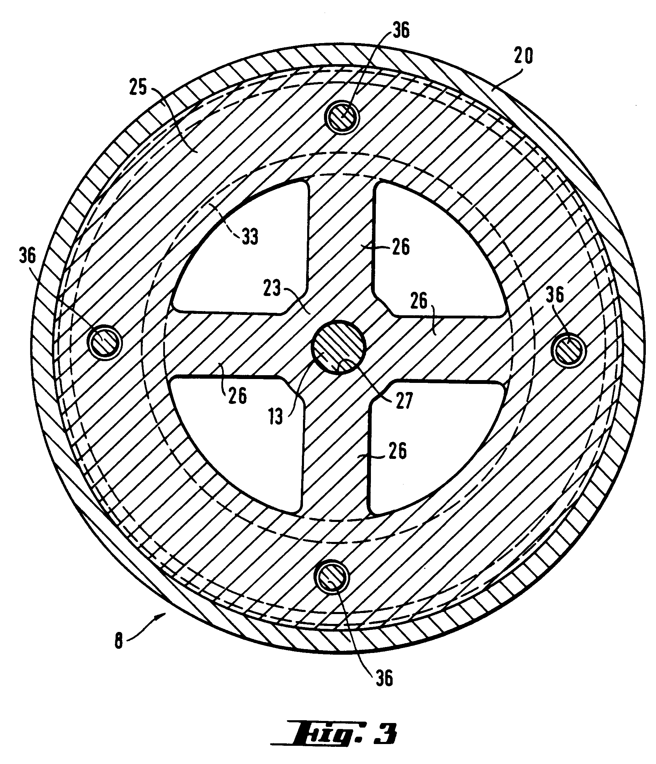

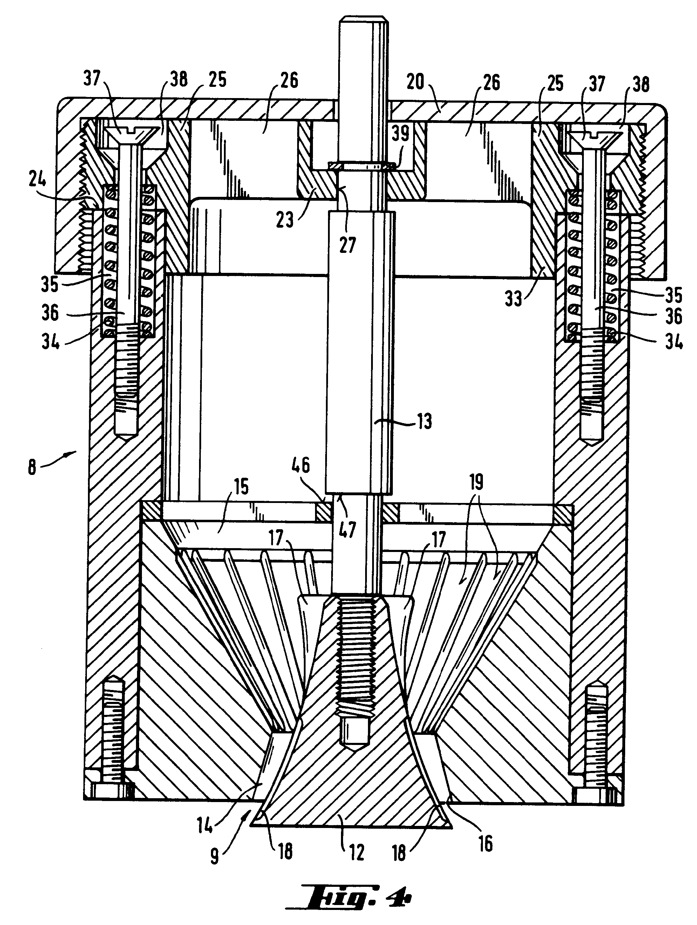

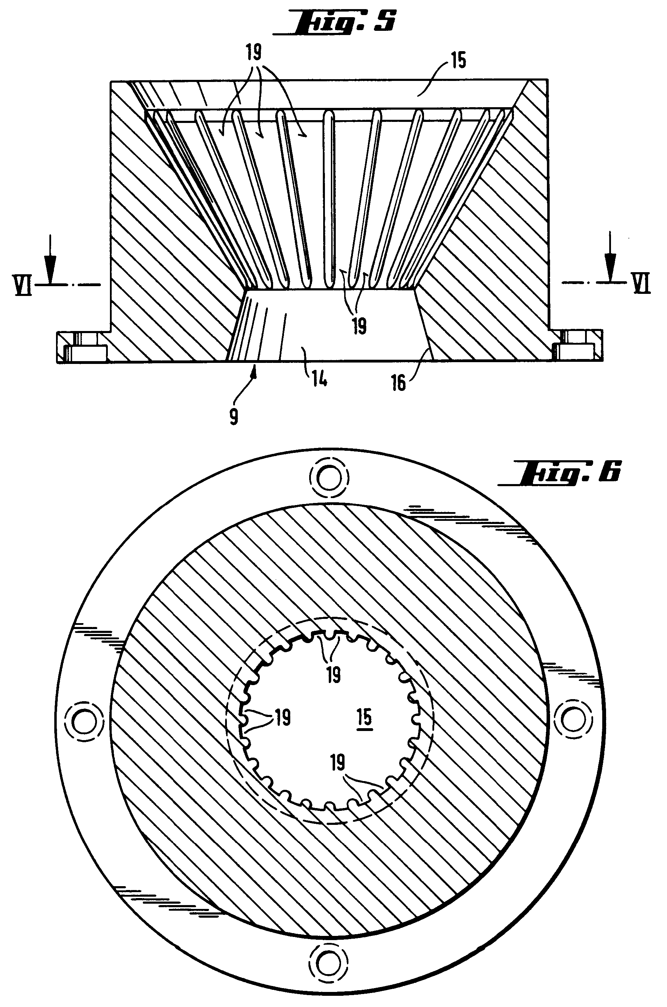

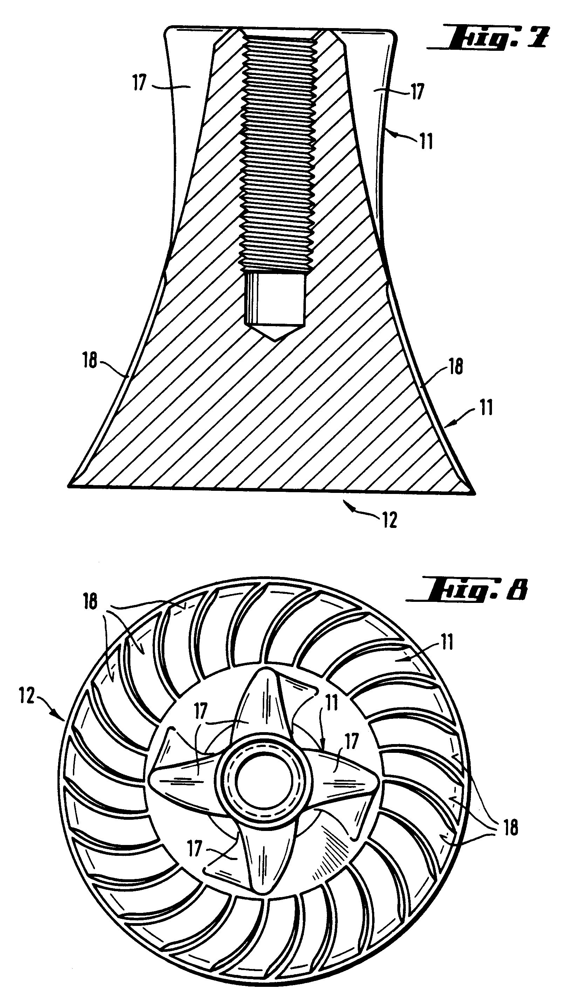

In den Figuren 2 bis 4 und bezüglich Einzelteilen auch in den Figuren 5 bis 8 ist vor allem der für die präzise Dosierung wichtige Ausgabe-Behälter 8 mit Auslaß 9 und Fördermittel 11 näher und vergrößert dargestellt. Dabei erkennt man, daß der Auslaß 9 an der Unterseite des Behälters 8 angebracht ist und als Verschluß einen sich nach oben verjüngenden, gem. Fig.4 zum Öffnen vertikal nach unten verstellbaren Ventilkörper 12 aufweist, wobei dieser Ventilkörper 12, mit Hilfe einer ihn haltenden Welle 13 drehantreibbar ist und zumindest während seiner Offenstellung rotiert und gemäß Fig.7 und 8 Mittel zum Fördern des Gutes in Richtung zu der Auslaßöffnung 14 des Auslasses trägt, die in vorteilhafter Weise gleichzeitig auch einer Verklumpung des Gutes entgegenwirken.

In vorteilhafter Weise sind also die schon erwähnten Fördermittel 11 und der Verschluß des Auslasses 9 durch ein und denselben Ventilkörper 12 gebildet, der nicht nur eine einfache axiale Bewegung zum Öffnen und Schließen durchführt, sondern in Offenstellung in für ein Ventil ungewöhnlicher Weise rotiert.

Dabei erkennt man im Bodenbereich des Behälters 8 oberhalb der von dem Ventilkörper 12 zu verschließenden Auslaßöffnung 14 einen Trichter 15. Die Auslaßöffnung 14 erweitert sich von der engsten Stelle dieses Trichters 15 zu der Unterseite des Behälters 8 und zu dem eigentlichen Ventilsitz 16 hin etwa konisch, was das Ausgeben von Pulver bei geöffnetem Ventil erleichtert, da sich auch der Ventilkörper 12 in dieser Richtung in seinem Querschnitt vergrößert.

Der größte Querschnitt der sich erweiternden Auslaßöffnung 14 entspricht dabei dem größten Querschnitt des Ventilkörpers 12 und der Ventilkörper 12 ist in Schließstellung mit seiner unteren Stirnfläche bündig mit der Unterseite des Behälters 8. Dadurch befindet sich der Ventilsitz, an welchem der größte Querschnitt des Ventilkörpers 12 in Schließstellung anliegt, an der Unterseite des Behälters, ohne daß der Ventilkörper 12 über diese Unterseite vorsteht.

Als Fördermittel 11 sind gemäß Fig.7 und 8 an dem rotierenden Ventilkörper 12 Flügel 17, im Ausführungsbeispiel vier gleichmäßig am Umfang verteilte Flügel 17 ,vorgesehen. Fig.7 zeigt dabei, daß diese mit dem Ventilkörper 12 zusammen als Fördermittel 11 dienenden Flügel 17 in dessen bezüglich des Durchmessers vermindertem oberem Bereich angeordnet sind. Sie können nach unten hin schaufelförmig in dem Sinne gekrümmt sein, daß sie beim Rotieren des Ventilkörpers 12 einen Vorschub des Gutes nach unten bewirken, wie dies auch bei Förderspindeln oder -schnecken der Fall ist.

Dabei sind diese auch ein Verklumpen des Gutes verhindernden Flügel 17 an dem Bereich des Ventilkörpers 12 angeordnet, der zumindest in Schließstellung gemäß Fig.2, aber auch noch in Offenstellung gemäß Fig.4 in dem Trichter 15 im Bodenbereich des Behälters 8 angeordnet ist, so daß in diesem sich verjüngenden und verengenden Bereich, in dem das nachrutschende pulverförmige Gut unter Umständen zum Verklumpen neigen könnte, nicht nur schnell und zusätzlich zum Einfluß der Schwerkraft weiterbefördert, sondern auch am Verklumpen gehindert wird. Sollte doch die eine oder andere Verklumpung entstehen, kann sie sofort von den Flügeln 17 wieder zerstört werden.

Die Flügel 17 gehen dabei vom oberen Ende des Ventilkörpers 12 aus, wo sie gemäß Fig.7 auch ihre größte radiale Ausdehnung haben, und verlaufen über wenigstens ein Drittel, gegebenenfalls etwa die Hälfte des Ventilkörpers 12 nach unten.

Der untere Bereich des Ventilkörpers 12 hat in vorteilhafter Weise weitere Fördermittel 11, die auch gegen Verklumpungen wirksam sind und zwar gebogene Rillen 18 oder Nuten, deren Biegung und Krümmung etwa schraubenlinienförmig im Sinne einer Förderschnecke mit beim Rotieren des Ventilkörpers 12 abwärts gerichteter Förderrichtung ausgebildet ist und die auf der Oberfläche des Ventilkörpers 12 angeordnet sind. Da sich diese Rillen oder Nuten 18 im unteren Bereich des Ventilkörpers 12 befinden, werden sie im Bereich der Auslaßöffnung 14 wirksam, wo aufgrund der Enge des lichten Spaltes bei geöffnetem Ventilkörper 12 nicht genügend Platz für Flügel 17 wäre. Dennoch kann auch in diesem Bereich mit Hilfe der Rillen oder Nuten 18 die Förderwirkung des rotierenden Ventilkörpers unterstützt und ein Hängenbleiben irgend welcher Klumpen im Auslaßspalt vermieden werden.

Gemäß Fig.6 ist es ferner möglich, die Wandungen des Trichters 15 und/oder der sich erweiternden Auslaßöffnung 14 mit abwärts gerichteten Rillen, Nuten 19 oder dergleichen zu versehen, die wiederum einem Verklumpen entgegenwirken.

In den Figuren 2 und 4, aber auch in Fig.1 erkennt man, daß die den Ventilkörper 12 haltende Welle 13 über ein Deckel 20 des Behälters 8 übersteht. An ihrem Überstand ist die Welle 13 mit einem Antriebsmotor 21 kuppelbar oder gemäß Fig. 1 gekuppelt. Dabei erkennt man die lösbare Kupplung 22 in Fig. 1 zwischen dem Antriebsmotor 21 und dem Behälter 8.

Gemäß den Figuren 2 und 3 hat der von der Antriebswelle 13 des Ventilkörpers 12 durchsetzte Deckel 20 eine Lagerung 23 für diese Welle 13 und ist mit der Welle 13 zusammen gegen eine Rückstellkraft bis zu einem Anschlag 24 abwärts verstellbar. Die in Fig.3 erkennbare Lagerung besteht dabei aus einem von dem Deckel 20 übergriffenen Ring 25, der über Speichen 26 mit dem die Lagerung 23 bildenden mittleren Bereich verbunden ist, wo auch eine Durchtrittslochung 27 für die Welle 13 angeordnet ist.

Zum Verstellen des Deckels 20 und damit der Lagerung 23 in vertikaler Richtung nach unten und damit wiederum auch zum Öffnen des rotierenden Ventilkörpers 12 sind an der Oberseite des Deckels 20 ansetzbare Arbeitszylinder 28, vorzugsweise Druckzylinder vorgesehen, die in Fig. 1 angedeutet sind. Die Druckzylinder 28 sind dabei an einem oberhalb des Behälters 8 mit Hilfe einer Spindel 29 auf- und abwärts verstellbaren Träger 30 angeordnet, der im Ausführungsbeispiel auch den Antriebsmotor 21 für den drehbaren Ventilkörper 12 trägt. Die Spindel 29 wird mit Hilfe eines weiteren Motors 31 betätigt und kann dadurch eine axial verstellbar, aber drehfeste Mutter 32, welche mit dem Träger 30 mit dem Motor 21 und den Zylindern 28 verbunden ist, in der Höhe verstellen, so daß die Arbeitszylinder 28 und der Motor 21 mit der Kupplung 22 beispielsweise nach dem Füllen des Behälters 8 in ihre in Fig. 1 dargestellte Betriebsposition verstellt werden können.

Der Träger 30 für den Motor 21 ist also zusammen mit diesem Motor in Kupplungsstellung abwärts verstellbar und in dieser Position sind die Verstellelemente der Druckzylinder 28 in Kontakt oder nahezu in Kontakt mit dem Deckel 20 des Behälters 8, so daß sie dann zum Abwärtsdrücken des Deckels 20 zur Verfügung stehen.

Der Deckel 20 bzw. der ihm zugehörige Ring 25 greift an einer vertikalen Führung des Behälters an und zwar im Ausführungsbeispiel mit einem in die Innenöffnung des Behälters 8 eingreifenden Bund 33, der an dem oberen Randbereich der Innenwand des Behälters 8 zentriert und gegen im Wandungsbereich angeordnete Druckfedern 34 abwärts verstellbar ist.

Die Druckfedern 34 sind in Ausnehmungen oder Lochungen 35 der Gefäßwandung achsparallel zur Welle 13 angeordnet und stehen über den oberen Rand des Behälters über. Sie sind im Ausführungsbeispiel als Schraubenfedern ausgebildet, in deren Innerem die Aufwärtsbewegung des Deckels 20 begrenzende Stehbolzen 36 angeordnet sind. Deren Gewinde ist dabei in die Behälterwandung eingeschraubt, während ihr Kopf 37 den Deckel 20 bzw. den damit verbundenen Ring 25 in einer entsprechenden Ausnehmung 38 festlegt.

Die durch den Kopf 37 in der Ausnehmung 38 fixierte höchste Position des Deckels 20 und seines Ringes 25 erkennt man in Fig. 2, wobei in dieser Position auch die Welle 13 über einen Haltering 39 an der Lochung 27 der Lagerung 23 so hoch wie möglich gehoben ist, nämlich in die Position, in welcher der Ventilkörper 12 die Auslaßöffnung 14 dicht verschließt.

Soll eine bestimmte Menge des Behälterinhaltes ausgegeben werden, wird der Deckel 20 in die in Fig. 4 erkennbare Position oder eine zwischen den Positionen der Fig. 2 und der Fig. 4 befindliche Zwischenstellung niedergedrückt und der Ventilkörper 12 mit Hilfe des Motors 21 in rotierende Bewegung versetzt. Nunmehr kann aufgrund der Schwerkraft und der Wirkung der Flügel 17 und/oder der Rillen 18 so lange Material aus dem Behälter 8 abgegeben werden, bis die Drehbewegung eingestellt und das Ventil wieder geschlossen werden. Durch die Wahl des Öffnungsspaltes kann dies während und vor allem gegen Ende des Dosiervorganges sehr feinfühlig gesteuert werden.

In Fig. 1 ist angedeutet, daß ein Mikrocomputer 40 oder dergleichen Rechner zum Ansteuern der Antriebsmotoren 21 und 31 und auch der unterhalb des Behälters 8 angeordneten Waage 10 sowie einer Ausgabevorrichtung 41 für Auffangbecher 42 vorgesehen ist, der den Antriebsmotor 21 für den Ventilkörper 12 und die Druckzylinder 28 von der Waage 10 gesteuert stillsetzt, wenn ein auf der Waage 10 stehender Auffangbecher 42 die vorgewählte dosierte Gutmenge enthält. Da dem Rechner zuvor schon die dosierte Menge eingegeben sein kann, kann er so programmiert sein, daß er schon kurz vor Erreichen dieser Menge den Schließvorgang des Ventilkörpers und die Verlangsamung seiner Drehung beginnt, so daß eine Überschreitung der eigentlich gewünschten Dosiermenge vermieden werden kann.

Selbstverständlich kann der Behälter 8 auch mit einem vertikal im wesentlichen nicht verschiebbaren Deckel 20 ausgestattet sein. In diesem Fall ist die Welle 13 allein gegen eine Rückstellkraft abwärts, relativ zum Deckel 20 verstellbar. Vorzugsweise weist in diesem Fall der den Deckel 20 überragende Teil der Welle 13 eine Verzahnung auf, an der ein Zahnrad eines Stellmotors für die Vertikalverschiebung angreifen kann. In bevorzugter Weise erfolgt dabei die Steuerung der Antriebsmotoren derart, dass zuerst der Stellmotor für die vertikale Verschiebung betätigt wird und nach Oeffnen des Verschlusses der Antriebsmotor 21 die Welle 13 mit dem daran befestigten Ventilkörper 12 in Drehbewegung versetzt.

Zum Transport der Auffangbecher 42 von deren Ausgabevorrichtung 41 zu der Waage 10 ist eine Drehscheibe 43 oder dergleichen Fördermittel, im Ausführungsbeispiel eine gelochte Scheibe 43 vorgesehen, in deren Lochungen 44 jeweils ein Becher 42 paßt. Diese Transportscheibe 43 ist zum Absetzen des jeweiligen Bechers 42 auf der Waage 10 gegenüber der Waagenoberseite geringfügig absenkbar, so daß sie von den sich etwas konisch erweiternden Bechern 42 aus der in Fig. 1 ersichtlichen Position freikommt. In Fig. 1 ist die Drehscheibe 43 kurz vor ihrem Absenken zum Freigeben des Bechers 42 dargestellt.

Es wäre aber auch umgekehrt möglich, daß die Waage 10 zu diesem Zweck aus der dargestellten Position etwas anhebbar ist.

Die Ansteuerung der einzelnen Antriebe, Motoren und Aggregate durch den Computer 40 und die Rückmeldung von den einzelnen Aggregaten zu dem Computer ist in der Fig. 1 jeweils durch Doppelpfeile dargestellt. Somit erkennt man in Fig. 1 auch, daß die Becher-Ausgabevorrichtung 41 und der Antrieb 45 für die Transportscheibe 43 von der Waage 10 und/oder dem Antrieb 21 für den rotierenden Ventilkörper 12 über den Computer 40 angesteuert ist. Dadurch wird sichergestellt, daß immer dann, wenn ein Becher 42 mit einer dosierten Menge von pulverförmigem Gut gefüllt wurde, dieser abtransportiert und ein neuer Becher 42 zugeführt werden können.

Es wurde schon angedeutet, daß der Öffnungsspalt und/oder die Drehzahl des rotierenden Ventilkörpers 12 verstellbar sind. Auch dies kann durch Steuerung über den Computer 40 erfolgen.

Dabei kann im Inneren des Behälters 8 ein unterer Anschlag 46 für einen Absatz 47 an der Welle 13 des rotierenden Ventilkörpers 12 zur Begrenzung der größtmöglichen Öffnung vorgesehen sein. Man erkennt in Fig.4, daß dieser Anschlag 46 normalerweise gar nicht erreicht wird, da zuvor schon der Deckel 20 seine tiefste Position erreicht hat.

Mit der dargestellten und beschriebenen Vorrichtung 1 kann eine sehr präzise dosierte Menge einer pulverförmigen Substanz aus dem Behälter 8 ausgegeben werden, ohne daß es durch Verklumpungen und dergleichen zu Verfälschungen der dosierten Menge kommt und ohne daß für die angestrebte präzise Dosierung eine zu langsame Arbeitsgeschwindigkeit eingestellt werden muß. Dazu trägt bei, daß die Schwerkraft und Fördermittel gemeinsam das Gut austragen und die Fördermittel gleichzeitig mit einem Trichter und einer sich konisch erweiternden Auslaßöffnung derart zusammenwirken, daß Verklumpungen und Verstopfungen vermieden werden und eine zusätzliche Förderwirkung auf das Gut ausgeübt wird. Durch die erfindungsgemässe Ausbildung des Behälters 8 und seines Verschlusses kommt es praktisch auch kaum zu einer Verschmutzung des Arbeitsbereiches mit der pulverförmigen Substanz. Um jegliche Verschmutzungsgefahr auszuschalten, kann der Behälter 8 im Bereich des Ventilverschlusses noch mit einem zusätzlichen Schliessschieber ausgestattet sein, der vor dem Einsetzen des Abgabe-Behälters 8 in die Dosiervorrichtung 1 manuell, oder in besonders bevorzugter Art nach dem Einsetzen des Behälters 8 in die Dosiervorrichtung mit Hilfe von pneumatisch, elektrisch oder anderswie verschiebbaren Stösseln geöffnet werden kann.

**Patentansprüche**

1.  Vorrichtung zum Dosieren von trockenem und/oder pulverförmigem Schüttgut, insbesondere von Farbstoffpulver z.B. in einer Labor-Färbestraße für Textilien, mit einem Ausgabe-Behälter (8), der in seinem unteren Bereich einen verschließbaren Auslaß hat, und mit einer von dem Auslaß des Behälters her mit einem vorzugsweise rotierenden Fördermittel beschickbaren Waage (10) für die jeweils zu dosierende Menge, **dadurch gekennzeichnet,** daß der Auslaß (9) an der Unterseite des Behälters (8) angeordnet ist und als Verschluß einen sich nach oben verjüngenden, vertikal nach unten verstellbaren Ventilkörper (12) aufweist, daß der Ventilkörper (12) drehantreibbar ist und zumindest während seiner Offenstellung rotiert und Mittel zum Fördern des Gutes in Richtung zu der Auslaßöffnung (14) und/oder gegen Verklumpen des Gutes trägt.

2.  Vorrichtung nach Anspruch 1, dadurch gekennzeichnet, daß im Bodenbereich des Behälters (8) oberhalb der von dem Ventilkörper (12) verschlossenen Auslaßöffnung (14) ein Trichter (15) vorgesehen ist.

3.  Vorrichtung nach Anspruch 1 oder 2, dadurch gekennzeichnet, daß sich die Auslaßöffnung (14) von der engsten Stelle des Trichters (15) zu der Unterseite des Behälters (8) und dem Ventilsitz - vorzugsweise konisch - erweitert.

4. Vorrichtung nach einem der Ansprüche 1 bis 3, dadurch gekennzeichnet, daß der größte Querschnitt der sich erweiternden Auslaßöffnung (14) dem größten Querschnitt des Ventilkörpers (12) entspricht und der Ventilkörper (12) in Schließstellung vorzugsweise mit seiner unteren Stirnfläche bündig mit der Unterseite des Behälters (8) ist.

5. Vorrichtung nach einem der Ansprüche 1 bis 4, dadurch gekennzeichnet, daß als Fördermittel an dem rotierenden Ventilkörper (12) wenigstens ein Flügel vorzugsweise mehrere am Umfang gleichmäßig verteilte Flügel vorgesehen sind.

6. Vorrichtung nach einem der Ansprüche 1 bis 5, dadurch gekennzeichnet, daß der/die als Fördermittel (11) dienenden Flügel (17) an dem Ventilkörper in dessen bezüglich des Durchmessers vermindertem Bereich angeordnet und von oben nach unten schaufelförmig in dem Sinne gekrümmt ist/sind, in welchem bei Rotieren des Ventilkörpers ein Vorschub des Gutes nach unten bewirkt wird.

7. Vorrichtung nach einem der Ansprüche 1 bis 6, dadurch gekennzeichnet, daß die Mittel zum Fördern und-/oder gegen Verklumpen des Gutes an dem Bereich des Ventilkörpers (12) angeordnet sind, der zumindest in Schließstellung in dem Trichter (12) am Boden des Behälters (8) angeordnet ist.

8. Vorrichtung nach einem der Ansprüche 1 bis 7, dadurch gekennzeichnet, daß der/die Flügel (17) etwa vom oberen Ende des Ventilkörpers ausgehen und wenigstens über ein Drittel, gegebenenfalls etwa die Hälfte des Ventilkörpers (12) nach unten verlaufen.

9. Vorrichtung nach einem der Ansprüche 1 bis 8, dadurch gekennzeichnet, daß der untere Bereich des Ventilkörpers (12) Mittel zum Fördern (11) und/oder gegen Verklumpen in Form von gebogenen Rillen (18) oder dergleichen auf weist, deren Biegung und Krümmung vorzugsweise etwa schraubenlinienförmig im Sinne einer Förderschnecke mit beim Rotieren des Ventilkörpers (12) abwärts gerichteter Förderrichtung ausgebildet ist und die auf der Oberfläche des Ventilkörpers (12) angeordnet sind.

10. Vorrichtung nach einem der Ansprüche 1 bis 9, dadurch gekennzeichnet, daß die Wandungen des Trichters (15) und/oder der sich erweiternden Auslaßöffnung (14) vorzugsweise abwärts gerichtete Rillen, Nuten (19) oder dergleichen aufweisen.

11. Vorrichtung nach einem der vorstehenden Ansprüche, dadurch gekennzeichnet, daß die den Ventilkörper (12) haltende Welle (13) über einen Deckel 20 des Behälters (8) übersteht und an ihrem überstand mit einem Antriebsmotor (21) kuppelbar oder gekuppelt ist.

12. Vorrichtung nach einem der Ansprüche 1 bis 11, dadurch gekennzeichnet, daß der von der Antriebswelle (13) des Ventilkörpers (12) durchsetzte Deckel (20) eine Lagerung (23) für diese Welle (13) und mit dieser Welle (13) zusammen gegen eine Rückstellkraft vorzugsweise bis zu einem Anschlag (24) abwärts verstellbar ist.

13. Vorrichtung nach einem der Ansprüche 1 bis 12, dadurch gekennzeichnet, daß zum Verstellen des Deckels (20) in vertikaler Richtung nach unten und damit zum Öffnen des rotierenden Ventilkörpers (12) an der Oberseite des Dekkels (20) ansetzbare Arbeitszylinder (28), insbesondere Druckzylinder vorgesehen sind.

14. Vorrichtung nach einem der Ansprüche 1 bis 13, dadurch gekennzeichnet, daß die Druckzylinder (28) an einem oberhalb des Behälters (8) auf- und abwärts verstellbaren Träger (30) angeordnet sind, der vorzugsweise auch den Antriebsmotor für den drehbaren Ventilkörper (12) trägt.

15. Vorrichtung nach einem der Ansprüche 1 bis 14, dadurch gekennzeichnet, daß der Träger (30) für den Motor (21) zusammen mit dem Motor in Kupplungsstellung abwärts verstellbar ist und in dieser Position die Verstellelemente der Druckzylinder (28) in Kontakt oder nahezu in Kontakt mit dem Deckel (20) des Behälters (8) und dann zum Abwärtsdrücken des Deckels (20) betätigbar sind.

16. Vorrichtung nach einem der Ansprüche 1 bis 15, dadurch gekennzeichnet, daß der Deckel (20) an einer vertikalen Führung des Behälters (8), vorzugsweise mit einem in die Innenöffnung eingreifenden Bund (33) oder dergleichen an dem Gefäß angreift und gegen in seinem Wandungsbereich angeordnete Druckfedern (34) abwärts verstellbar ist.

17. Vorrichtung nach einem der Ansprüche 1 bis 16, dadurch gekennzeichnet, daß die in Ausnehmungen oder Lochungen (35) der Gefäßwandung angeordneten und über deren oberen Rand überstehenden Druckfedern Schraubenfedern sind, in deren Innerem die Aufwärtsbewegung des Deckels (20) begrenzende Stehbolzen (36) oder dergleichen angeordnet sind.

18. Vorrichtung nach einem der vorstehenden Ansprüche, dadurch gekennzeichnet, daß ein Mikrocomputer Rechner oder dergleichen zum Ansteuern der Antriebsmotoren und/oder der unterhalb des Behälters (8) angeordneten Waage (10) und/oder einer Ausgabevorrichtung für Auffangbecher (42) vorgesehen ist, der den Antriebsmotor (21) für den Ventilkörper (12) und die Druckzylinder (28) von der Waage (10) gesteuert stillsitzt, wenn ein Auffangbecher die vorgewählte dosierte Gutmenge enthält.

19. Vorrichtung nach einem der Ansprüche 1 bis 18, dadurch gekennzeichnet, daß zum Transport der Auffangbecher (42) von deren Ausgabevorrichtung (41) zu der Waage (10) eine Drehscheibe (43) oder dergleichen, vorzugsweise eine gelochte Scheibe (43) vorgesehen ist, in deren Lochung (44) jeweils ein Becher (42) paßt, und daß diese Transportscheibe (43) zum Absetzen des Bechers (42) auf der Waage (10) gegenüber der Waagenoberseite geringfügig absenkbar oder die Waage (10) aufhebbar ist, so daß sie von den sich etwas konisch erweiternden Bechern freikommt.

20. Vorrichtung nach einem der Ansprüche 1 bis 19, dadurch gekennzeichnet, daß die Becher-Ausgabevorrichtung (41) und Antrieb (45) für die Transportscheibe (43) oder dergleichen von der Waage (10) und/oder dem Antrieb (21) für den rotierenden Ventilkörper (12) über den Computer (40) angesteuert ist.

21. Vorrichtung nach einem der Ansprüche 1 bis 20, dadurch gekennzeichnet, daß der Öffnungsspalt und-/oder die Drehzahl des rotierenden Ventilkörpers (12) verstellbar sind.

22. Vorrichtung nach einem der Ansprüche 1 bis 21, dadurch gekennzeichnet, daß im Inneren des Behälters (8) ein unterer Anschlag (46) für einen Absatz (47) an der Welle (13) des rotierenden Ventilkörpers (12) zur Begrenzung der größtmöglichen Öffnung vorgesehen ist.

## Claims

1. An apparatus for metering dry and/or pulverulent pourable material, especially dye powder, for example in a laboratory dyeing line for textiles, having a discharge container (8), which has a closable outlet in its lower region, and having a scales (10) for the amount to be metered that can be charged from the outlet of the container using a conveying means, preferably a rotating conveying means, wherein the outlet (9) is arranged on the underside of the container (8) and has as closure a valve body (12) that tapers towards the top and can be displaced vertically downwards, wherein the valve body (12) can be driven in rotation and rotates at least while it is in its open position and has means for conveying the material in the direction towards the outlet opening (14) and/or means for counteracting agglutination of the material.

2. An apparatus according to claim 1, wherein a funnel (15) is provided in the base region of the container (8) above the outlet opening (14) closed by the valve body (12).

3. An apparatus according to claim 1 or 2, wherein the outlet opening (14) widens - preferably conically - from the narrowest point of the funnel (15) to the underside of the container (8) and the valve seat.

4. An apparatus according to any one of claims 1 to 3, wherein the largest cross-section of the widening outlet opening (14) corresponds to the largest cross-section of the valve body (12), and in the closed position preferably the lower end face of the valve body (12) is flush with the underside of the container (8).

5. An apparatus according to any one of claims 1 to 4, wherein as conveying means there are provided on the rotating valve body (12) at least one vane, and preferably several vanes distributed uniformly over the circumference.

6. An apparatus according to any one of claims 1 to 5, wherein the vane(s) (17) acting as conveying means (11) is(are) arranged on the valve body in its region of reduced diameter and is(are) curved from the top to the bottom in the manner of a scoop in such a way that when the valve body rotates the material is advanced downwards.

7. An apparatus according to any one of claims 1 to 6, wherein the means for conveying and/or for counteracting agglutination of the material are arranged on the region of the valve body (12) that, at least in the closed position, is arranged in the funnel (12) at the base of the container (8).

8. An apparatus according to any one of claims 1 to 7, wherein the vane(s) (17) begin approximately at the upper end of the valve body and extend downwards along at least a third, optionally approximately half, of the valve body (12).

9. An apparatus according to any one of claims 1 to 8, wherein the lower region of the valve body (12) has conveying means (11) and/or means counteracting agglutination in the form of curved channels (18) or the like of which the winding and curvature are preferably approximately helical in the manner of a conveyor screw, with the conveying direction being directed downwards when the valve body (12) rotates, and which are arranged on the surface of the valve body (12).

10. An apparatus according to any one of claims 1 to 9, wherein the walls of the funnel (15) and/or the widening outlet opening (14) have channels, grooves (19) or the like, which are preferably directed downwards.

11. An apparatus according to any one of the preceding claims, wherein the shaft (13) holding the valve body (12) projects above a lid (20) of the container (8) and the projecting portion can be coupled or is coupled to a drive motor (21).

12. An apparatus according to any one of claims 1 to 11, wherein the lid (20) through which the drive shaft (13) of the valve body (12) passes has a bearing (23) for that shaft (13) and can be displaced downwards together with the shaft (13), preferably as far as a stop (24), against a restoring force.

13. An apparatus according to any one of claims 1 to 12, wherein in order to displace the lid (20) downwards in the vertical direction and thus to open the rotating valve body (12), there are provided working cylinders (28), especially pressure cylinders, that can be brought to rest on the upper side of the lid (20).

14. An apparatus according to any one of claims 1 to 13, wherein the pressure cylinders (28) are arranged on a support (30) which can be displaced upwards and downwards above the container (8), the support preferably also carrying the drive motor for the rotatable valve body (12).

15. An apparatus according to any one of claims 1 to 14, wherein the support (30) for the motor (21) can be displaced downwards together with the motor into the coupling position and in that position the displacement elements of the pressure cylinders (28) are in contact or almost in contact with the lid (20) of the container (8) and are then operable for depressing the lid (20).

16. An apparatus according to any one of claims 1 to 15, wherein the lid (20) engages a vertical guide on the container (8), preferably with a collar (33) or the like that projects into the internal opening, and can be displaced downwards against the force of compression springs (34) arranged in the wall region of the vessel.

17. An apparatus according to any one of claims 1 to 16, wherein the compression springs, which are arranged in recesses or holes (35) in the vessel wall and project above the upper edge thereof, are helical springs inside which there are arranged stay bolts (36) or the like which limit the upward movement of the lid (20).

18. An apparatus according to any one of the preceding claims, wherein for controlling the drive motors and/or the scales (10) arranged below the container (8) and/or a discharge device for collecting beakers (42) there is provided a microcomputer, processor or the like which, controlled by the scales (10), stops the drive motor (21) for the valve body (12) and the pressure cylinders (28) when a collecting beaker contains the preselected metered amount of material.

19. An apparatus according to any one of claims 1 to 18, wherein in order to transport the collecting beakers (42) from their discharge device (41) to the scales (10) there is provided a rotating disc (43) or the like, preferably a disc (43) having holes, a beaker (42) fitting into each of the holes (44), and this transport disc (43) can be lowered slightly relative to the upper side of the scales in order to set down a beaker (42) on the scales (10), or the scales (10) can be lifted, so that it releases the somewhat conical beakers.

20. An apparatus according to any one of claims 1 to 19, wherein the beaker discharge device (41) and the drive (45) for the transport disc (43) or the like are controlled by the scales (10) and/or the drive (21) for the rotating valve body (12) via the computer (40).

21. An apparatus according to any one of claims 1 to 20, wherein the gap size and/or the speed of the rotating valve body (12) are(is) adjustable.

22. An apparatus according to any one of claims 1 to 21, wherein inside the container (8) there is provided a lower stop (46) for a projection (47) on the shaft (13) of the rotating valve body (12) to limit the greatest possible opening.

## Revendications

1. Dispositif pour le dosage d'un produit en vrac sec et/ou pulvérulent, notamment par exemple d'une couleur en poudre dans une chaîne de teinture expérimentale de textiles, comprenant un réceptacle distributeur (8) muni, dans sa région inférieure, d'une sortie obturable, ainsi qu'une balance (10) pour la quantité respective à doser, qui peut être alimentée à partir de la sortie du réceptacle, à l'aide d'un moyen de convoyage de préférence rotatif, caractérisé par le fait que la sortie (9) est ménagée à la face inférieure du réceptacle (8) et présente, en tant qu'obturation, un corps obturateur (12) qui se rétrécit vers le haut et est mobile verticalement vers le bas ; et par le fait que le corps obturateur (12) peut être mené en rotation, tourne au moins dans sa position d'ouverture, et porte des moyens pour convoyer le produit en direction de l'orifice de sortie (14), et/ou pour empêcher une formation d'agglomérats.

2. Dispositif selon la revendication 1, caractérisé par le fait qu'un entonnoir (15) est prévu dans la zone du fond du réceptacle (8), au-dessus de l'orifice de sortie (14) obturé par le corps obturateur (12).

3. Dispositif selon la revendication 1 ou 2, caractérisé par le fait que l'orifice de sortie (14) s'évase - de préférence tronconiquement - à partir de la zone la plus étroite de l'entonnoir (15), vers la face inférieure du réceptacle (8) et le siège de l'obturateur .

4. Dispositif selon l'une des revendications 1 à 3, caractérisé par le fait que la section transversale maximale de l'orifice de sortie (14) s'évasant correspond à la section transversale maximale du corps obturateur (12) et, dans la position de fermeture, ce corps obturateur (12) vient de préférence à fleur, par sa face extrême inférieure, de la face inférieure du réceptacle (8).

5. Dispositif selon l'une des revendications 1 à 4, caractérisé par le fait qu'au moins une ailette, de préférence plusieurs ailettes uniformément réparties sur le pourtour, sont prévues en tant que moyen de convoyage sur le corps obturateur rotatif (12).

6. Dispositif selon l'une des revendications 1 à 5, caractérisé par le fait que l'ailette/les ailettes (17) servant de moyen de convoyage (11) est/sont disposée(s) sur le corps obturateur, dans la région de celui-ci qui présente un diamètre réduit, et est/sont recourbée(s) de haut en bas en forme d'aube(s), dans le sens dans lequel une progression du produit vers le bas est provoquée lors d'une rotation du corps obturateur.

7. Dispositif selon l'une des revendications 1 à 6, caractérisé par le fait que les moyens de convoyage et/ou empêchant une formation d'agglomérats du produit sont disposés sur la région du corps obturateur (12) qui se trouve dans l'entonnoir (12), au moins dans la position de fermeture, au fond du réceptacle (8).

8. Dispositif selon l'une des revendications 1 à 7, caractérisé par le fait que l'ailette/les ailettes (17) part(ent) sensiblement de l'extrémité supérieure du corps obturateur et s'tend(ent), ves le bas, sur au moins un tiers, le cas échéant sur approximativement la moitié du corps obturateur (12).

9. Dispositif selon l'une des revendications 1 à 8, caractérisé par le fait que la règion infèrieure du corps obturateur (12) présente des moyens de convoyage (11) et/ou empêchant une formation d'agglomèrats, et revêtant la forme de rainures curvilignes (18) ou configurations similaires dont le cintrage et la courbure possèdent de préférence une allure sensiblement hélicoïdale, à la manière d'une vis sans fin convoyeuse à direction de convoyage vers le bas lors de la rotation du corps obturateur (12), et qui sont ménagées sur la surface du corps obturateur (12).

10. Dispositif selon l'une des revendications 1 à 9, caractérisé par le fait que les parois de l'entonnoir (15) et/ou de l'orifice de sortie (14) s'évasant présentent des rainures, des gorges (19) ou configurations similaires préférentiellement dirigées vers le bas.

11. Dispositif selon l'une des revendications précédentes, caractérisé par le fait que l'arbre (13), retenant le corps obturateur (12), fait saillie au-delà d'un couvercle (20) du réceptacle (8) et peut être accouplé ou est accouplé, dans sa zone débordante, à un moteur d'entrainement (21).

12. Dispositif selon l'une des revendications 1 à 11, caractérisé par le fait que le couvercle (20), traversé par l'arbre d'entraînement (13) du corps obturateur (12), présente une portée (23) destinée à cet arbre (13) et peut être déplacé vers le bas conjointement audit arbre (13), en s'opposant à une force de rappel, de préférence jusqu'à une butée (24).

13. Dispositif selon l'une des revendications 1 à 12, caractérisé par le fait que des vérins (28), en particulier des vérins à fluide pressurisé pouvant être implantés à la face supérieure du couvercle (20), sont prévus pour déplacer ledit couvercle (20) vers le bas dans le sens vertical, et donc pour ouvrir le corps obturateur rotatif (12).

14. Dispositif selon l'une des revendications 1 à 13, caractérisé par le fait que les vérins (28) à fluide pressurisé sont disposés sur un support (30) qui est mobile à va-et-vient vertical au-dessus du réceptacle (8) et porte également, de préférence, le moteur d'entraînement du corps obturateur rotatif (12).

15. Dispositif selon l'une des revendications 1 à 14, caractérisé par le fait que le support (30) du moteur (21) est mobile vers le bas conjointement audit moteur en position accouplée et, dans cette position, les éléments moteurs des vérins (28) à fluide pressurisé sont en contact ou quasiment en contact avec le couvercle (20) du réceptacle (8), puis peuvent être actionnés en vue de presser ledit couvercle (20) vers le bas.

16. Dispositif selon l'une des revendications 1 à 15, caractérisé par le fait que le couvercle (20) vient en prise avec le réceptacle sur un guide vertical de ce réceptacle (8), de préférence par une collerette (33) ou élément similaire s'engageant dans l'orifice intérieur, et peut être déplacé vers le bas en s'opposant à l'action de ressorts de pression (34), logés dans sa zone de cloisonnement.

17. Dispositif selon l'une des revendications 1 à 16, caractérisé par le fait que les ressorts de pression, disposés dans des évidements ou dépouilles (35) de la paroi du réceptacle, et faisant saillie au-delà du bord supérieur de ladite paroi, sont des ressorts hélicoïdaux dont l'espace interne renferme des boulons verticaux (36) ou pièces similaires limitant le mouvement ascendant du couvercle (20).

18. Dispositif selon l'une des revendications précédentes, caractérisé par le fait qu'un micro-ordinateur, un calculateur ou un élément similaire, prévu pour l'activation des moteurs d'entraînement et/ou de la balance (10) sous-jacente au réceptacle (8) et/ou d'un appareil distributeur de gobelets collecteurs (42), provoque une mise à l'arrêt commandée du moteur d'entraînement (21) du corps obturateur (12) et des vérins (28) à fluide pressurisé, à partir de ladite balance (10), lorsqu'un gobelet collecteur renferme la quantité de produit dosée présélectionnée.

19. Dispositif selon l'une des revendications 1 à 18, caractérisé par le fait que, pour transporter les gobelets collecteurs (42) de leur appareil distributeur (41) jusqu'à la balance (10), l'on a prévu un disque rotatif (43) ou un moyen similaire, de préférence un disque perforé (43) dans la perforation (44) duquel un gobelet (42) s'adapte respectivement ; et par le fait que ce disque de transport (43) peut être légèrement abaissé par rapport à la face supérieure de la balance, en vue de déposer le gobelet (42) sur cette balance (10), ou bien ladite balance (10) peut être soulevée de telle sorte que ledit disque se dégage des gobelets s'évasant sensiblement en tronc de cône.

20. Dispositif selon l'une des revendications 1 à 19, caractérisé par le fait que l'appareil (41) distributeur de gobelets et l'entraînement (45) du disque de transport (43) ou élément similaire sont activés, par l'intermédiaire de l'ordinateur (40), à partir de la balance (10) et/ou de l'entraînement (21) du corps obturateur rotatif (12).

21. Dispositif selon l'une des revendications 1 à 20, caractérisé par le fait que l'interstice d'ouverture et/ou la vitesse angulaire du corps obturateur rotatif (12) sont réglables.

22. Dispositif selon l'une des revendications 1 à 21, caractérisé par le fait qu'une butée inférieure (46), destinée à un décrochement (47) ménagé sur l'arbre (13) du corps obturateur rotatif (12), est prévue à l'intérieur du réceptacle (8) en vue de limiter l'ouverture maximale possible.

Fig. 1

*Fig. 2*

Fig. 3

**Fig. 4**

Fig. 5

Fig. 6

18

Fig. 7

Fig. 8

Fig. 9